# FASCICULE DE BREVET EUROPEEN

(11) **EP 1 996 314 B1**
(45) Date de publication et mention de la délivrance du brevet: **31.08.2011**
(21) Numéro de dépôt: 07727055.1
(22) Date de dépôt: 19.03.2007
(51) Int. Cl.: B01D 53/22, B01D 63/00, B01D 63/02, B01D 67/00, B01D 69/00, B01D 71/72, B01J 8/00, B01J 19/24, B01J 35/06

(54) **MEMBRANE CREUSE ET SON PROCÉDÉ DE FABRICATION**
HOHLMEMBRAN UND VERFAHREN ZU SEINER HERSTELLUNG
HOLLOW MEMBRANE AND METHOD OF PRODUCING OF SAME

(30) Priorité: 17.03.2006 FR 0650932
(43) Date de publication de la demande: 03.12.2008
(73) Titulaire: Commissariat à l'Énergie Atomique et aux Énergies Alternatives, 75015 Paris (FR)
(72) Inventeur: ERMOLAEV, Stanislav, Obninsk, 249020 (RU); JITARIOUK, Nicolai, F-75014 Paris (FR); LE MOEL, Alain, F-92370 Chaville (FR)
(74) Mandataire: Ilgart, Jean-Christophe
(86) Numéro de dépôt international: PCT/EP2007/052577
(87) Numéro de publication internationale: WO 2007/107542

(56) Documents cités:
- FR-A1- 2 770 150
- US-A- 3 764 018
- US-A- 5 232 593
- US-A- 5 328 610

## Description

### DOMAINE TECHNIQUE

L'invention appartient au domaine du traitement des fluides; liquides ou gaz, en vue de transférer un ou plusieurs composés ou de la chaleur d'un fluide à un autre. Plus particulièrement, l'invention a trait aux membranes creuses présentant des propriétés spécifiques et destinées à ce traitement des fluides pour, par exemple, en séparer un ou plusieurs composés par des phénomènes d'absorption, d'adsorption et/ou de transfert au travers de la membrane, ou pour transférer de la matière et/ou de la chaleur entre deux fluides séparés par la membrane.

Sous un de ses aspects, l'invention concerne un procédé de fabrication d'une membrane polymérique adaptée, permettant d'optimiser la nature de la surface de la membrane et de diminuer tout phénomène parasite la polluant.

Sous un autre de ses aspects, l'invention se rapporte à une membrane ainsi fabriquée, et à ses applications, notamment pour traiter des fluides ou dans un module adapté.

### ÉTAT DE LA TECHNIQUE ANTÉRIEURE

Pour véhiculer deux fluides entre lesquels il faut transférer, de façon sélective, un composant ou de la chaleur, on utilise classiquement pour le premier fluide un espace intracapillaire et pour le deuxième fluide un espace intercapillaire (une cavité interne). Les systèmes membranaires les plus efficaces sont les systèmes capillaires biologiques comme le poumon, l'intestin et le rein : une vaste quantité de capillaires plus au moins courts sont présents sur la surface de l'organe et servent au transfert, avec un rapport de leur longueur à leur diamètre compris entre environ 10 et environ 30.

Par exemple, avec une quantité d'environ 5·10⁸ capillaires par cm², les alvéoles pulmonaires représentent une surface d'environ 200 m²: elles sont groupées en petites grappes et formées de cellules à parois très minces, au niveau desquelles s'effectue le transfert des gaz (oxygène et dioxyde de carbone). Le volume de sang qui passe en 24 heures dans les poumons est évalué à environ 10 m³.

Les systèmes biologiques sont ainsi très efficaces, et les scientifiques cherchent à les imiter : de nombreux développements visent à augmenter la surface membranaire spécifique Sᵥ (c'est-à-dire l'aire de la surface de la membrane par unité de volume du module membranaire) des systèmes artificiels, avec notamment les modules spiralés (S_{v̇} ≈ 10³ m²/m³) puis les modules à fibres creuses (Sᵥ ≈ 2·10³ m²/m³), qui restent néanmoins assez loin des espèces biologiques (pour les poumons humains, Sᵥ ≈ 5·10⁴ m²/m³).

Les membranes utilisées jusqu'à présent pour le traitement de fluides peuvent être des membranes planes, des membranes en forme de fibres creuses (voir par exemple US 5 232 593), ou de préférence des membranes creuses contenant une multitude de capillaires dont la longueur est beaucoup plus courte que celle des fibres creuses (US 3 764 018, US 5 328 610). En effet, une limitation de la longueur des fibres permet de limiter la chute de pression du fluide y circulant. Il apparaît cependant que les panneaux de membrane à fibres creuses comprenant, tel que décrits dans ces documents, deux couches de base en matériau textile encapsulé dans un matériau non perméable, et une multiplicité de fibres creuses de matériau perméable s'étendant entre les deux couches précitées, ne sont pas optimisés étant donné que les couches de base n'ont aucune propriété particulière vis-à-vis du fluide à traiter.

Aussi un procédé de fabrication a-t-il été développé, consistant à polymériser un monomère sur une matrice possédant des pores cylindriques de type « *track-etch »*, comme décrit dans le document WO 99/21643. La matrice est installée de façon à séparer la solution de monomère hétérocyclique (pyrrole, thiophène et leurs dérivés) ou aniline d'une solution oxydante. La couche de polymère formée couvre non seulement les surfaces principales de la matrice mais aussi les parois des pores cylindriques en recouvrant totalement la matrice, qui est ensuite éliminée par dissolution ou décomposition. La membrane creuse ainsi obtenue possède une multitude de capillaires formant deux conduits pouvant véhiculer deux fluides différents qui sont séparés par les parois, cylindriques, de capillaires de la membrane creuse et par les parois faciales, planes.

Comme un transfert de matière dans des capillaires de petit diamètre a lieu en régime laminaire d'écoulement du fluide, pour intensifier la procédure de transfert dans ces conditions spécifiques, il faut avoir des capillaires courts de petit diamètre ainsi qu'une distance intercapillaire faible d'une part, et des capillaires à paroi fine d'autre part. Par ailleurs, il serait préférable de pouvoir créer les parois en réalisant une polymérisation orientée du monomère sur la matrice et, si possible, d'avoir une forme de cône de petit diamètre, celui-ci étant dirigé vers l'orifice d'entrée du capillaire.

Or le procédé susmentionné génère sur les parois des capillaires et surtout dans les orifices d'entrée/sortie des pores, un taux massique qui peut être important d'homopolymère qui adhère à la surface et se trouve sous forme de fines billes. Les microbilles ainsi formées ont tendance à colmater l'espace intérieur des capillaires en créant une résistance excessive au passage des fluides, et la structure globulaire des parois des capillaires se caractérise par une faible résistance mécanique des membranes obtenues.

De plus, la formation des microbilles conduit à l'obtention d'une paroi ayant une surface rugueuse et à l'augmentation de son épaisseur. Or, pour obtenir des membranes possédant une résistance mécanique élevée, il faut pouvoir créer une structure lamellaire de polymère formant des capillaires avec des parois lisses ou au moins pouvoir former des globules de très faible taille par rapport au diamètre interne des capillaires et de l'épaisseur de ses parois.

### EXPOSÉ DE L'INVENTION

L'invention se propose, parmi autres avantages, de pallier les inconvénients des procédés existants, et de fabriquer une membrane creuse unitaire polymérique traversée par des capillaires, chacun ayant des parois minces, lisses dont la structure se rapproche encore plus de celle des systèmes biologiques naturels.

L'invention concerne ainsi un procédé de préparation de membrane creuse destinée notamment au traitement de fluides (liquides et/ou gaz) en vue de séparer de ceux-ci un ou plusieurs composants demeurant de préférence en solution réelle ou colloïdale par des phénomènes d'absorption, d'adsorption et/ou de transfert sélectif dont la force motrice est la différence de pression ou la différence de concentration de part et d'autre de la membrane. Cette dernière est réalisée en un matériau présentant des propriétés spécifiques vis-à-vis d'un ou plusieurs composants desdits fluides en faisant varier de manière adaptée les conditions de préparation, comme le temps de polymérisation, ou le type de monomère.

Sous un de ses aspects, l'invention concerne un procédé de préparation d'une membrane creuse polymérique comprenant deux couches d'extrémité séparées l'une de l'autre par un espace et une pluralité de tubes capillaires disposés entre les deux couches d'extrémités et présentant chacun une ouverture au niveau de chacune des deux couches d'extrémité de façon à former des canaux d'écoulement de fluide, l'espace entre les tubes et les couches d'extrémité formant une cavité interne de circulation d'un fluide autour des tubes, les deux couches d'extrémité et les tubes étant de structure unitaire polymérique, le polymère formant cette structure polymérique comprenant une pluralité de couches polymériques successives, lequel procédé comprend les étapes successives consistant à :
a) disposer d'une matrice comportant une plaque avec deux surfaces (ou faces) externes et munie de pores ouverts la traversant ;
b) former sur les surfaces externes et dans les pores de la matrice un revêtement polymérique par polymérisation à partir d'un monomère précurseur d'un polymère ;
c) réitérer l'étape précédente de polymérisation (b) un nombre (n) de fois, à partir à chaque fois d'un monomère précurseur d'un polymère ;
d) éliminer le matériau formant la matrice par destruction à l'aide d'un réactif sélectif qui n'affecte pas le revêtement polymérique pour former la cavité interne de la membrane creuse.

Ainsi, le procédé comporte une étape de formation sur les surfaces externes et dans les pores d'une matrice comportant des pores, avantageusement rectilignes, ouverts entre ses deux surfaces externes, un revêtement organique par polymérisation en plusieurs étapes, par exemple de 3 à 50 ou, de préférence, 5 à 20, avantageusement 10, chaque polymérisation étant effectuée à partir d'un monomère précurseur d'un polymère, ce monomère pouvant être le même lors des différentes étapes de polymérisation ou, au contraire, différent d'une étape de polymérisation à l'autre.

Dans tous les cas, le monomère est, de préférence, choisi parmi les monomères précurseurs des polymères conducteurs de l'électricité, et notamment parmi le pyrrole, le thiophène et leurs dérivés, l'aniline et l'acétylène.

Le procédé selon l'invention comprend l'étape supplémentaire consistant à éliminer ensuite lié matériau formant la matrice par destruction à l'aide d'un réactif sélectif qui n'affecte pas le revêtement polymérique pour former la cavité interne de la membrane creuse.

Lors des étapes successives de polymérisation, le monomère peut être différent ou identique ; il est avantageux qu'il appartienne à la même famille chimique. Préférentiellement ce sera le même monomère. Il est aussi envisageable, lors d'une même étape de polymérisation, d'employer un mélange de monomères, qui appartiennent alors à la même famille chimique.

Dans le cadre de la présente invention, on considère que deux monomères appartiennent à la même famille chimique lorsqu'ils possèdent les mêmes fonctions polymérisables comme c'est, par exemple, le cas du pyrrole et de ses dérivés, ou bien du thiophène et de ses dérivés.

Par analogie, on considère que deux polymères appartiennent à la même famille chimique lorsqu'ils résultent de la polymérisation de monomères présentant les mêmes fonctions polymérisables.

Les différentes étapes de polymérisation peuvent être effectuées notamment par voie chimique. En particulier, la membrane creuse est réalisée de préférence en un ou des polymères organiques susceptibles d'être obtenus par oxydation chimique d'un monomère précurseur, par exemple de polymères conducteurs de l'électricité : polymères hétérocycliques (polypyrrole ou polythiophène), polyaniline ou polyacétylène. Ainsi, une des étapes de polymérisation au moins est réalisée par oxydation chimique par un agent oxydant, en mettant en contact une surface externe de la matrice avec une solution d'agent oxydant, et l'autre surface externe avec une solution de monomère, éventuellement complémentée par un agent dopant. De préférence, les surfaces mises en contact avec chaque solution sont alternées lors d'étapes successives, c'est-à-dire qu'alternativement la solution de monomère est mise en contact avec une surface de la matrice et la solution de l'agent oxydant est mise en contact avec l'autre surface de la matrice, et le potentiel d'oxydoréduction (E°) de l'agent oxydant lors d'une étape de polymérisation donnée est inférieur ou égal à à celui de l'agent oxydant lors de l'étape de polymérisation qui la précède.

Selon un mode de réalisation particulier, une étape supplémentaire de rinçage de la matrice revêtue par le polymère est effectuée, avantageusement entre chacune des étapes de polymérisation.

L'invention permet notamment d'augmenter le rapport massique entre le polymère pelliculaire et l'homopolymère formant des microbilles, c'est-à-dire le rapport entre la masse de polymère formant un film couvrant les surfaces cylindriques et faciales de la matrice (« polymère pelliculaire ») et la masse de l'homopolymère, qui forme des amas sur les surfaces (« microbilles »). Ce procédé permet aussi de réguler de façon plus précise l'épaisseur de la couche du polymère pelliculaire obtenu sur la matrice et donc la perméabilité du fluide à travers les pores formés dans les parois des capillaires (formées après l'élimination du matériau de la matrice). Ce procédé permet aussi d'obtenir un revêtement, ayant une structure supramoléculaire moins défectueuse, plus orientée en direction de l'axe du capillaire et donc plus résistant mécaniquement.

Sous un autre aspect, l'invention se rapporte à une membrane creuse susceptible d'être obtenue par le procédé exposé ci-dessus. Typiquement une membrane creuse selon l'invention comprend deux couches d'extrémité disposées l'une au dessus de l'autre et séparées par un espace dans lequel sont disposés une pluralité de tubes capillaires qui présentent chacun une ouverture au niveau de chacune des deux couches d'extrémité. Ainsi sont formés des canaux capillaires d'écoulement d'un premier fluide, l'espace entre les tubes capillaires et les deux couches d'extrémité formant une cavité interne de circulation d'un second fluide autour des tubes capillaires. Les deux couches d'extrémité et les tubes capillaires, de structure unitaire, sont constitués d'une pluralité de couches successives de polymère, de préférence organique, ayant des propriétés sélectives choisies en fonction de la nature du composant à séparer, ces couches successives pouvant être constituées du même polymère organique ou, au contraire, de polymères organiques dfférents (d'une couche à l'autre), auquel cas ces polymères organiques sont avantageusement de la même famille chimique, notamment du polyacétylène, polypyrrole, polyaniline ou polythiophène.

La structure particulière de la membrane creuse de l'invention présente de nombreux avantages et ressemble beaucoup aux systèmes naturels de transfert de matière. En particulier, les parois des tubes capillaires sont lisses, de faible épaisseur et ne sont pas recouvertes, ou recouvertes en faible proportion, de microbilles de l'homopolymère. Les tubes capillaires créent ainsi une faible perte de charge à l'écoulement des fluides et sont efficaces au niveau de la vitesse de transfert à travers les parois du composant à séparer. Le polymère peut avoir été dopé, redopé ou dédopé, sur la face interne et/ou externe de la membrane, de telle sorte que des affinités se développent entre la membrane et le composant à séparer.

L'invention concerne également l'utilisation de ces membranes creuses, en particulier pour le traitement de fluides.

L'invention concerne notamment un module de traitement de fluides comprenant au moins deux membranes creuses dont l'une au moins est telle que définie ci-dessus, la ou les autres membranes creuses étant de préférence également telle(s) que définie(s) ci-dessus. Typiquement un module de traitement comprend : au moins deux membranes creuses comprenant chacune deux couches d'extrémité disposées l'une au dessus de l'autre en ménageant entre elles un espace, ainsi qu'une pluralité de tubes capillaires disposés entre elles et présentant chacun une ouverture au niveau de chacune des deux couches d'extrémité. Les membranes creuses sont disposées dans une enceinte étanche ayant une ou plusieurs parois, de façon à ménager entre deux membranes creuses adjacentes, et entre chaque membrane creuse qui est adjacente à la paroi ou à l'une des parois de l'enceinte et cette ou ces parois, des espaces de circulation pour un premier fluide uniquement en communication avec l'intérieur des tubes capillaires des membranes creuses. Enfin, des moyens sont prévus pour mettre en circulation le premier fluide dans les tubes capillaires en l'introduisant dans l'un des espaces de circulation et en le recueillant dans un autre des espaces de circulation, et pour mettre en circulation un second fluide dans la cavité interne des membranes creuses. Les membranes creuses sont avantageusement séparées par des plaques poreuses.

L'invention concerne encore une méthode de traitement de fluides, dans laquelle ont utilise au moins une membrane creuse telle que définie ci-dessus ou un module de traitement tel que défini ci-dessus. Ces membranes sélectives et ces modules peuvent être utilisés dans divers domaines, par exemple, pour le lavage des gaz acides, pour la préparation des gaz de synthèse, comme membranes poreuses pour les piles à combustible, pour lutter contre la pollution de l'environnement en purifiant les gaz des fours ou en traitant les effluents aqueux et organiques, pour extraire les matériaux désirés de fluides contenant plusieurs composants.

L'invention concerne enfin un procédé de fabrication d'un tel module, qui comporte typiquement les étapes suivantes :
(1) préparer au moins deux membranes composites, chacune à partir d'une matrice (1) comprenant une plaque avec deux surfaces externes et munie de pores ouverts la traversant, en formant sur les surfaces externes, et dans les pores de la matrice un revêtement polymérique par polymérisation d'un monomère précurseur d'un polymère, la polymérisation étant réitérée un nombre (n) de fois pour au moins l'une des deux membranes composites, à partir chaque fois d'un monomère précurseur d'un polymère ;
(2) former à partir des membranes composites et de plaques de matière poreuse un empilement dans lequel chaque membrane composite est disposée entre deux plaques de matière poreuse ;
(3) former un ou plusieurs joints étanches entre les membranes composites et les plaques poreuses sur les faces latérales de l'empilement ;
(4) réaliser des ouvertures dans le ou les joints étanches au niveau des membranes composites, et pour chaque membrane composite seulement sur deux faces latérales différentes de l'empilement ;
(5) introduire par ces ouvertures un réactif capable de détruire le matériau formant la matrice des membranes composites sans affecter le polymère recouvrant les surfaces et les pores de la matrice, pour obtenir un empilement de membranes creuses et de plaques de matière poreuse dans lequel les cavités internes des membranes creuses sont accessibles sur les deux faces latérales de l'empilement.

De préférence, le procédé comprend la préparation d'une pluralité de membranes composites, dans laquelle la polymérisation est réitérée un nombre (n) de fois pour chacune des membranes composites.

### BRÈVE DESCRIPTION DES DESSINS

D'autres caractéristiques et avantages de l'invention ressortiront plus clairement à la lecture de la description suivante et en référence aux dessins annexés, donnés à titre uniquement illustratif et nullement limitatif.

Les figures 1A à 1D illustrent les étapes d'un procédé selon l'invention.

Les figures 2A et 2B montrent une membrane selon un mode de réalisation de l'invention, la figure 2C montrant une membrane réalisée selon l'art antérieur.

La figure 3 schématise un module de traitement selon un mode de réalisation de l'invention.

La figure 4 présente des courbes d'évolution du diamètre des pores de la matrice lors de la polymérisation du pyrrole en fonction de la durée accumulée de perméation en eau.

La figure 5 illustre l'évolution du diamètre équivalent des capillaires des membranes durant la polymérisation du pyrrole en fonction du nombre d'étapes de polymérisation.

### EXPOSÉ DÉTAILLÉ DE MODES DE RÉALISATION PARTICULIERS

Pour remplir la fonction qui leur est attribuée, les capillaires présents dans une membrane creuse doivent posséder une paroi mince de résistance mécanique importante. Par ailleurs, la structure de la membrane creuse doit pouvoir se supporter elle-même, ce que se traduit par la structure géométrique suivante : les parois des capillaires sont liées entre elles par les parois faciales et sont soutenues par les mêmes parois faciales de la membrane creuse. L'espace intérieur des capillaires devrait être ouvert sur toute sa longueur pour créer la perte de charge minimale au passage d'un fluide.

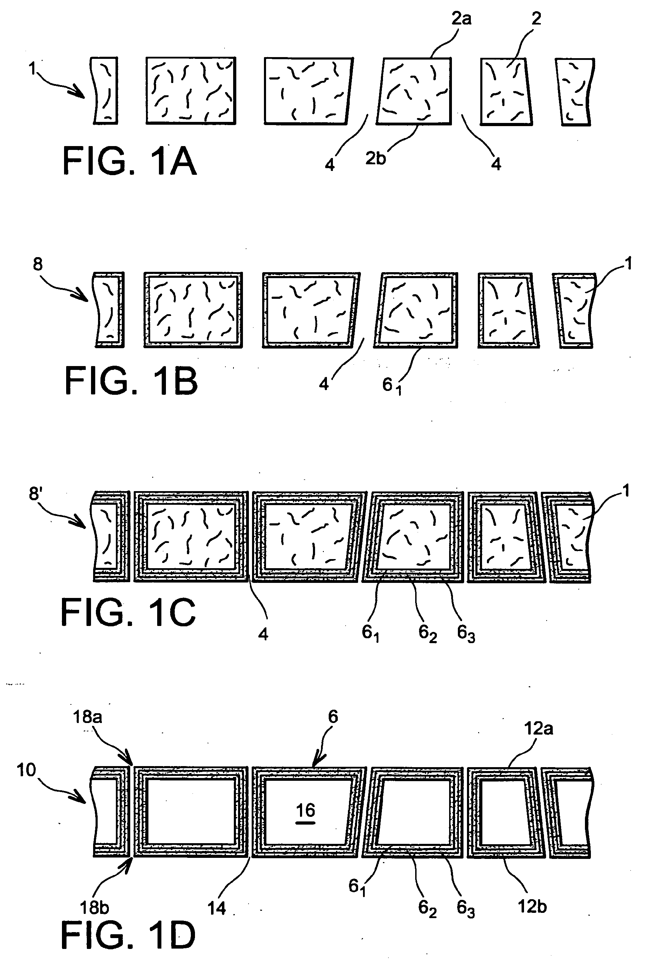

Tel qu'illustré en figure 1, pour former une membrane selon l'invention, en premier lieu, une matrice 1 est mise à disposition : figure 1A. Elle comporte une plaque 2 munie de pores 4 qui la traversent totalement. Les pores 4 sont rectilignes, et droits ou légèrement inclinés, en particulier d'un angle de 45° maximum par rapport à la normale aux faces 2a, 2b de la plaque. Les pores 4 peuvent être obtenus par exemple par l'action d'un faisceau d'ions lourds sur une membrane plane.

La matrice 1 peut être réalisée en matériau polymère ou en matériau inorganique. En particulier, les matériaux organiques susceptibles d'être utilisés sont, par exemple, des polycarbonates PC, du polytéréphtalate d'éthylène PET, des polyimides PI, du polyfluorure de vinylidène PVDF ou du polypropylène PP. Comme matériaux inorganiques, on peut envisager, par exemple, des oxydes d'aluminium, de titane ou de zirconium, du mica (phyllosilicates).

Dans un deuxième temps (figure 1B), la matrice 1 est revêtue de polymère 6 organique, au niveau de ses deux surfaces 2a, 2b et à l'intérieur des pores 4 ; une membrane composite 8 est obtenue, comprenant la matrice 1 revêtue d'une couche de polymère 6₁. Cette deuxième étape est répétée un nombre non nul de fois, pour obtenir une membrane composite 8' illustrée en figure 1C, dans laquelle la matrice 1 est revêtue d'une succession 6 de couches 6₁, 6₂, ..., 6ₙ de polymère, toutes ces couches étant constituées du même polymère ou de polymères différents, avantageusement de la même famille chimique. Ce ou ces polymères sont des polymères organiques, qui sont notamment susceptibles d'être obtenus par oxydation chimique d'un monomère précurseur (tels que, en particulier, les polymères hétérocycliques, la polyaniline ou le polyacétylène).

De préférence, une étape au moins de polymérisation, et plus avantageusement toutes les étapes sont obtenues par voie chimique ; une oxydation chimique s'applique notamment aux monomères choisis dans le groupe constitué par les monomères précurseurs des polymères électroconducteurs, c'est-à-dire aux composés hétérocycliques comme le pyrrole, le thiophène et leurs dérivés, ainsi qu'à l'aniline et à l'acétylène. La polymérisation du monomère précurseur peut être initiée, dans une phase aqueuse ou organique utilisant des solvants polaires comme l'acétonitrile et le carbonate de propylène ou un mélange d'un solvant organique (pris dans le groupe des alcools par exemple) et d'eau, par un agent oxydant (ion contenant un élément chimique dans son degré d'oxydation maximum) choisi de préférence dans le groupe comprenant les sels ferriques Fe³⁺, cériques Ce⁴⁺, les périodates IO₄⁻, les perbromates BrO₄⁻ ou les perchlorates ClO₄⁻ de tetraalkylammonium ou d'autres cations, et les sels contenant l'anion persulfate S₂O₈²⁻ ou phosphomolybdate.

En outre, un agent dopant peut éventuellement être également présent dans le milieu de polymérisation ; il peut notamment s'agir d'une base de Brônsted, choisie de préférence parmi les composés ayant un anion sulfonate et avantageusement du type R-SO₃⁻ où R est un groupe alkyle, aryle, alkylaryle, tel que les acides alkylbenzène sulfoniques, alkyltoluène sulfoniques, ou les sels desdites bases.

Ainsi, pour effectuer une polymérisation par voie chimique, la solution de monomère, contenant l'éventuel agent dopant, est par exemple introduite dans une chambre située d'un côté de la matrice et la solution de l'agent oxydant dans une chambre située de l'autre côté (la « chambre » représente l'espace situé d'un côté ou de l'autre de la matrice), pour être mis en contact avec la matrice et générer le polymère.

Selon l'invention, si deux polymérisations consécutives sont réalisées de façon similaire par voie chimique, il est avantageux d'alterner le contenu des chambres, c'est-à-dire que les solutions sont successivement introduites dans les chambres opposées : cela permet d'obtenir un revêtement de polymère distribué de façon plus homogène. Les parois du revêtement 6 le long des axes des capillaires 4 deviennent plus homogènes en épaisseur.

Le nombre d'étapes de polymérisation peut être compris entre 2 et 50, de préférence de 3 à 20 et avantageusement entre 5 et 10. La durée de chaque étape de polymérisation, la concentration des solutions ainsi que la température peuvent être les mêmes ou différentes à chaque étape de la polymérisation, tant pour la solution de monomère qu'éventuellement pour la solution de l'agent dopant d'un côté de la matrice et la solution de l'agent oxydant de l'autre côté.

Les conditions de la polymérisation sur les matrices poreuses en polymère sont variables, toutefois la concentration en monomère est par exemple de 10⁻³ mol/l à 10 mol/l, de préférence de 5·10⁻³ mol/l à 5·10⁻¹ mol/l et avantageusement de 10⁻² mol/l à 2·10⁻¹ mol/l. La concentration d'agent dopant est, par exemple, de 10⁻⁴ mol/l à 1 mol/l, de préférence de 5·10⁻⁴ mol/l à 3·10⁻¹ mol/l et avantageusement de 10⁻³ mol/l à 10⁻¹ mol/l. La concentration en agent oxydant est, par exemple, de 10⁻³ mol/l à 10 mol/l, de préférence de 5·10⁻² mol/l à 1 mol/l et avantageusement de 10⁻¹ mol/l à 5·10⁻¹ mol/l. La température de polymérisation est, par exemple, de -40°C à +50°C et de préférence de -30°C à +10°C.

La nature de l'agent oxydant ainsi que sa concentration lors des différentes étapes peuvent être les mêmes ou de préférence différentes.

En effet, durant la première étape de polymérisation, les molécules du monomère et les chaînes des macromolécules qui se forment entrent en contact avec la surface de la matrice 1, tandis qu'à partir de la deuxième ou troisième étape, les macromolécules qui se propagent seront en contact avec un revêtement 6ᵢ qui a déjà été créé lors d'une étape précédente. Comme le potentiel d'ionisation du polymère 6 qui forme le revêtement 6ᵢ est souvent inférieur à celui du monomère précurseur, le polymère 6ᵢ déjà formé lors des étapes précédentes s'oxyde en même temps que le monomère lors de l'étape en cours : de cette «*suroxydation*» peut résulter un développement de défauts structurels dans les chaînes en cours de formation. Pour réduire cet effet non souhaitable, il est préférable que le potentiel d'oxydoréduction de l'agent oxydant d'une étape donnée soit inférieur ou égal à celui de l'étape précédente.

Ainsi par exemple, à la première étape de la polymérisation, il est possible d'employer un agent oxydant plus puissant, par exemple, le chlorure de fer (potentiel standard d'oxydation E° = +0,77 V) pour la polymérisation de pyrrole tandis que pour les étapes suivantes un agent oxydant moins puissant, par exemple l'acide phosphomolybdénique H₇[P(Mo₂O₇)₆] aqueux de potentiel standard d'oxydation E° = +0,36 V, ionise de préférence le polymère déjà formé sur la matrice et non pas le monomère. En général, à partir de l'étape n = 2, il est préférable d'utiliser des agents de moins en moins puissants au niveau de leur valeur du potentiel standard d'oxydation mais suffisamment oxydants pour permettre la polymérisation.

De toutes façons, par les polymérisations successives, il y a formation de centres d'initiation des chaînes polymériques sur la surface de revêtement déjà formée et non pas dans la masse du monomère. Ceci permet une réduction de la probabilité de formation des centres d'homopolymérisation et donc des microbilles dans la masse du monomère, qui pourraient ensuite se déposer sur la surface du polymère pelliculaire couvrant la matrice.

Pour augmenter encore cet effet, un rinçage peut être effectué, avantageusement entre chaque étape de polymérisation, de préférence sur l'ensemble de la surface de la matrice et notamment au niveau des pores. Tout solvant n'altérant pas la matrice et le polymère, en particulier l'eau et/ou le solvant organique utilisé pour la polymérisation et/ou le mélange des deux peuvent être employés, en les faisant s'écouler à travers les pores 4. Le rinçage permet notamment d'enlever les traces de monomère, d'agent dopant et d'oxydant, d'extraire les microbilles d'homopolymère des pores et d'augmenter encore le rapport massique entre le polymère pelliculaire et l'homopolymère.

Selon un mode de réalisation particulier, le rinçage est effectué en installant une différence de pression de part et d'autre de la matrice 8'. Cette pression différentielle est, par exemple de 10⁻³ bar à 10 bars, et de préférence de 5·10⁻² bar à 1 bar. L'écoulement du liquide à travers la matrice revêtue peut être réalisé par exemple de -20°C à +95°C, de préférence de 0°C à +80°C. Le sens de l'écoulement du liquide peut varier : de la surface étant en contact avec la solution de l'oxydant vers la surface étant en contact avec la solution de monomère ou en sens inverse. L'effet du sens d'écoulement sur le rendement de rinçage peut être important dans le cas où la vitesse de formation de l'homopolymère sur les deux surfaces de la matrice est différente. Le sens préférable d'écoulement du liquide va de la surface moins couverte par les microbilles d'homopolymère vers la surface opposée ; de préférence, on fait écouler le liquide dans un sens et ensuite dans l'autre.

Une fois l'épaisseur de la couche polymérique 6 obtenue, c'est-à-dire après n polymérisations, le matériau formant la matrice 1 de départ est dissout ou décomposé, pour obtenir une membrane creuse 10 constituée uniquement du polymère organique multicouche 6. A cette fin, l'intérieur de la membrane composite 8' est par exemple rendu accessible en pratiquant une ouverture sur ses côtés, puis l'ensemble est immergé dans un solvant approprié capable de dissoudre le matériau formant la matrice 1 sans dissoudre le polymère organique 6.

Par exemple, avec les matrices 1 en matériau polymérique, la solution de décomposition peut être une solution de bases et d'acides inorganiques ou du permanganate de potassium dans le cas des PC, PET et PVDF ou de l'hypochlorite et du tétraborate de sodium pour le PI ou encore du chromate ou du bichromate de sodium ou de potassium en milieu acide pour le PP. Dans le cas des oxydes inorganiques, les solutions de décomposition peuvent être des bases ou acides inorganiques.

De fait, lors de la polymérisation, les anions de l'agent oxydant et du dopant entrent dans la structure de la chaîne de polymère formée. A l'étape de la décomposition de la matrice à l'aide, par exemple, de la solution de soude, ces anions se trouvent remplacés par des anions hydroxyle OH⁻, dont la taille est moins importante que celle des anions de l'agent oxydant (Cl⁻ en cas d'application de FeCl₃ comme oxydant) et/ou de l'agent dopant (anion de l'acide paratoluène sulfonique (p-TSA) ou anion de phosphomolibdate).

Lors du remplacement des gros anions par des plus petits, il peut y avoir formation de microcavités ou de porosité dans les parois de la membrane creuse 10. Cette porosité ou cette rugosité peuvent être modifiées par le choix approprié de l'agent oxydant et de l'agent dopant, par la concentration de ces agents ainsi que par les conditions de la polymérisation (température, solvant, concentration de monomère, etc.).

La concentration de la solution de décomposition se situe typiquement entre 0,5 et 10 mol/l, et la température est choisie entre 30 et 110°C. A la fin du traitement, la solution de décomposition est graduellement remplacée par un solvant adapté, tel que l'eau distillée, en ajoutant cette dernière en volume égal au volume de la solution de décomposition. Par exemple, la moitié de la solution est retirée et une quantité égale de solvant est ajoutée, diminuant ainsi progressivement la concentration de la solution de décomposition. La procédure est répétée en général 3 à 10 fois, la dernière itération étant effectuée par le solvant seul, toute la solution de décomposition diluée étant purgée.

Une fois cette étape terminée, il est possible de soumettre la membrane creuse 10 obtenue à des traitements de dopage, dédopage ou redopage, afin de modifier ses propriétés sélectives et la structure de ses parois.

Le dopage et le redopage consistent en un traitement en solution contenant des composés possédant un anion de type R-SO₃⁻ où R est un groupe alkyle, aryle ou alkylaryle ; le dédopage consiste en un traitement de la membrane creuse en solution basique, par exemple l'hydroxyde de sodium ou de potassium. Ces traitements permettent de créer sur les parois de la membrane des pores de différentes tailles, de rendre hydrophobe ou hydrophile la surface, de changer la rigidité et/ou flexibilité du polymère pelliculaire dont la membrane creuse est formée.

A la suite, suivant les usages, il est possible de greffer sur la surface de polymère pelliculaire différents groupes pour rendre cette surface active ainsi qu'utiliser ces groupes pour produire des réactions entre eux et diverses molécules (protéines, par exemple).

La membrane creuse obtenue 10, représentée sur la figure 1D, comporte deux couches d'extrémité 12a, 12b en polymère et des tubes capillaires 14 également en polymère disposés entre ces deux couches d'extrémité. L'espace entre les tubes capillaires forme une cavité interne 16 de circulation d'un second fluide autour des tubes capillaires. L'ensemble 10 est unitaire, bien que formé par de multiples couches 6ᵢ successives.

Les capillaires 14 entre les deux parois faciales 12a, 12b d'une membrane creuse 10 selon l'invention possèdent typiquement les caractéristiques suivantes :
- une longueur très faible, par exemple de 1 à 10³ µm, de préférence de 3 à 2·10² µm et avantageusement de 5 à 60 µm ;
- un diamètre interne très faible, par exemple de 0,02 à 50 µm, de préférence de 0,05 à 10 µm ;
- une épaisseur de paroi très faible, par exemple de 0,01 à 10 µm, de préférence de 0,02 à 3 µm, voire 0,03 à 2 µm, formées à partir d'une multicouche constituée en 3 à 20 étapes, de préférence 5 ou 10 ;
- une inclinaison par rapport aux surfaces de la membrane de 45 à 90°, de préférence faisant un angle 0 à 45° avec la perpendiculaire aux deux surfaces externes.

La quantité de tubes capillaires par unité de surface de la paroi faciale des membranes creuses selon l'invention peut être très élevée, par exemple de 5·10⁴ à 10¹⁰ tubes capillaires/cm², de préférence de 10⁵ à 5·10⁹ capillaires/cm².

Grâce au procédé selon l'invention, la structure superficielle de paroi des capillaires 14 est très lisse, et une absence totale ou une quantité réduite de microbilles de l'homopolymère attachées aux parois des capillaires peut être constatée. La structure macromoléculaire du polymère qui forme les parois cylindriques des capillaires des membranes creuses est sensiblement orientée le long de l'axe du cylindre : le polymère forme une couche continue de macromolécules ou de microbilles de très faible diamètre par rapport au diamètre interne du capillaire, le rapport entre le diamètre interne du capillaire et le diamètre des microbilles de polymère formé sur les parois étant typiquement de 5 à 100, et de préférence de 20 à 100.

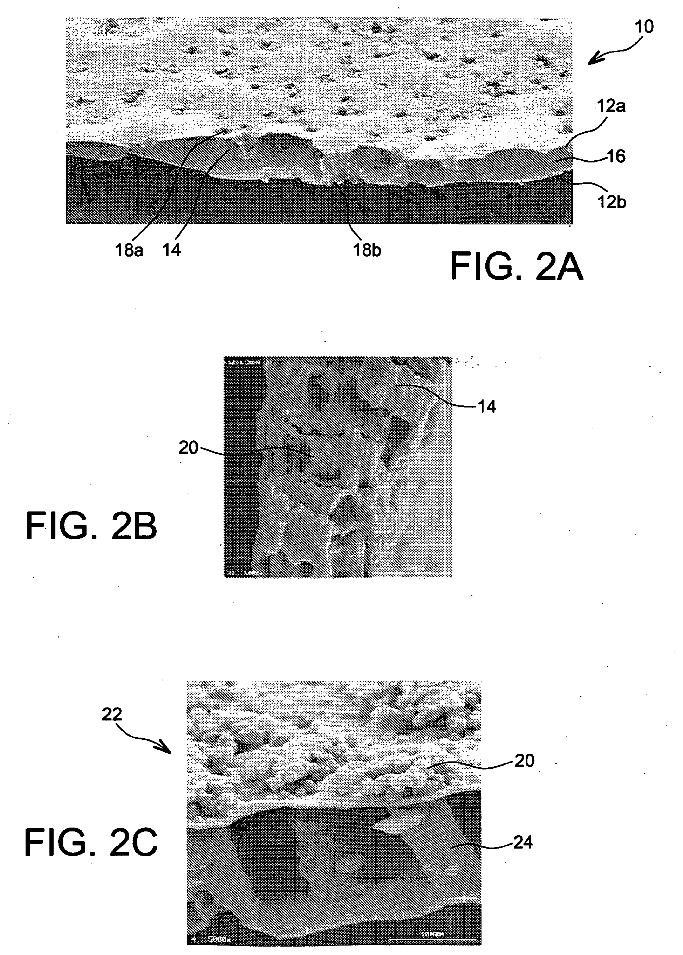

Par exemple, en figures 2A et 2B est représentée une membrane creuse 10 fabriquée selon un mode de réalisation de l'invention. En particulier, une matrice 1 de PET a été revêtue à 20°C de polypyrrole en 10 étapes, par mélange de pyrrole 0,05 M avec dopant 0,016 M de paratoluène sulfonate de sodium, l'agent oxydant étant du FeCl₃ 0,15 M dans un mélange 1:1 en volume eau/éthanol ; le taux de polymérisation atteint 23,5 %. Lors des dix polymérisations successives, durant par exemple 30 minutes chacune, les réactifs sont mis dans les mêmes chambres, la matrice 1 servant de séparatrice entre les deux solutions de mélange de monomère et d'agent oxydant. Le rinçage de la membrane a été effectué de la surfacé en contact avec la solution d'oxydant vers la surface en contact avec la solution de monomère entre chaque polymérisation.

Après le revêtement par le polypyrrole 6, la membrane composite 8' est traitée dans une solution d'hydroxyde de sodium à 80°C à une concentration de 6 mol/l, afin de décomposer la matrice 1 suivant la réaction :

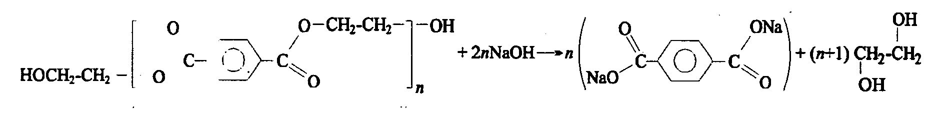

Tel qu'annoncé en relation avec la figure 1D, la membrane creuse obtenue 10 comprend deux couches d'extrémité (ou parois faciales) 12a, 12b disposées l'une au-dessus de l'autre et ménageant entre elles un espace 16 contenant une pluralité de tubes capillaires cylindriques 14. Chacun des capillaires 14 présente une ouverture 18a, 18b au niveau de chacune des deux couches d'extrémité 12a, 12b de façon à former un canal qui sert pour l'écoulement d'un premier fluide. L'espace entre les tubes capillaires 14 et les deux parois faciales 12 forme une cavité interne 16 de circulation d'un second fluide autour des tubes capillaires. Les parois des tubes capillaires 14 et des couches d'extrémité 12 sont lisses, de faible épaisseur et ne sont pas recouvertes ou recouvertes en faible proportion sur leur surface, de microbilles 20 de l'homopolymère : les pores 14 sont ouverts sur les deux cotés de la membrane.

A titre comparatif, pour une membrane creuse 22 obtenue par polymérisation en une seule étape de polymérisation, présentée en figure 2C pour les mêmes paramètres de fabrication, de nombreuses microbilles 20 d'homopolymère de polypyrrole sont présentes et colmatent fortement les ouvertures des pores de la membrane ; certains capillaires 24 sont même bouchés sur un ou deux cotés de la membrane 22.

Il faut souligner en outre que le taux de polymérisation de la membrane 22 obtenue en une seule étape de polymérisation est moins important (17,9 %) que celui de la membrane 10 obtenue en 10 étapes de polymérisation suivie de rinçage (25 %), et que, malgré ce fait, le colmatage est supérieur.

De fait, l'utilisation de la polymérisation en multiples étapes permet d'obtenir des membranes 10, à taux de polymérisation comparable, avec les tubes 14 plus ouverts. Le rapport entre le polymère pelliculaire 6 et l'homopolymère 20 de polypyrrole est plus important pour la polymérisation en multiples étapes et pour les solutions plus diluées.

Les-membranes 10 selon l'invention peuvent être utilisées notamment dans le domaine de la filtration, particulièrement pour la réalisation de dispositifs tels que des modules de filtration, des contacteurs (filtres extracteurs) gaz/gaz, gaz/liquide, liquide/liquide dont la surface d'échange est proche de celle des contacteurs biologiques comme poumons, reins, intestins. Ces membranes peuvent aussi être utilisées en procédés thermiques de séparation comme en pervaporation, dégazéification thermo-membranaire où il existe simultanément un transfert de matière et de chaleur. Il est aussi envisageable de les utiliser comme réacteurs membranaires.

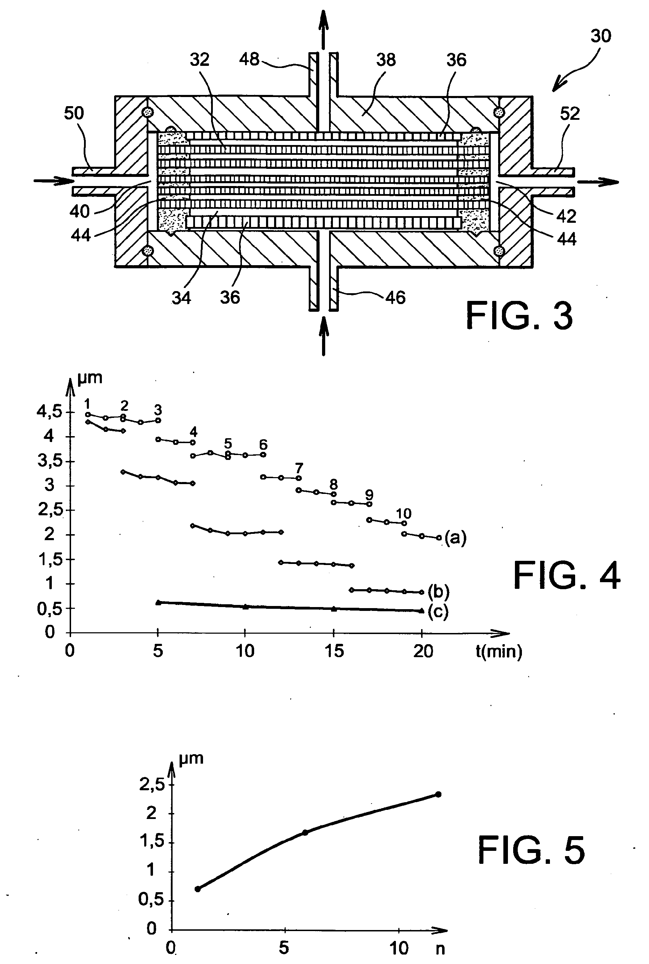

Un exemple de dispositif spécifique concerne un module de traitement tel qu'illustré en figure 3.

Le module 30 est formé d'un empilement de n membranes creuses 32, au nombre de 5 sur la figure, et de n + 1 plaques poreuses 34 alternées avec les membranes creuses 32 de façon que chaque membrane creuse 32 soit disposée entre deux plaques poreuses 34. Une des membranes creuses 32 au moins, et de préférence toutes, sont fabriquées selon le procédé de l'invention. L'empilement est supporté par deux grilles 36 disposées de part et d'autre de l'empilement. L'ensemble est introduit dans une enceinte étanche 38 en ménageant sur deux faces latérales opposées de l'enceinte une chambre 40 d'introduction d'un second fluide et une chambre 42 de réception de ce second fluide. Ces chambres sont en communication uniquement avec les cavités internes des membranes creuses 32, des joints 44 étant interposés au niveau de chaque plaque poreuse 34. Le fluide à traiter est introduit à la base de l'empilement par la conduite 46 et il ressort au sommet de l'empilement par la conduite 48, après avoir circulé dans les plaques poreuses 34 puis dans les canaux capillaires des membranes creuses 32 où il est en contact par l'intermédiaire des parois des capillaires avec le second fluide introduit par la conduite 50 et récupéré par la conduite 52.

Plus généralement, les membranes selon l'invention peuvent être utilisées dans tous les modules décrits dans le document WO 99/21643. En particulier, bien que cinq membranes creuses 32 soient représentées sur la figure 3, on pourrait réaliser un module de traitement de fluide ne comportant que deux membranes, voire qu'une seule membrane 32 entourée de deux espaces de circulation du fluide à traiter remplis éventuellement d'une matière poreuse.

Grâce au module selon ce mode de réalisation de l'invention, on peut transférer un composé à partir du premier fluide ou fluide à traiter, dans le second fluide ou l'inverse. Le second fluide pourrait bien évidemment constituer le fluide à traiter.

En particulier, le procédé selon l'invention et la membrane ou le module en résultant peuvent être appliqués dans des méthodes de traitement des fluides, aux procédés biologiques et pharmaceutiques comme la fermentation, la fabrication de protéines, la séparation de molécules spécifiques du milieu biologique, les procédés d'oxydations biologiques. Ils sont utiles pour la mise en oeuvre de procédés médicaux et peuvent être employés dans des appareils médicaux tels que, par exemple, les oxygénateurs sanguins (saturation du sang par l'oxygène et évacuation du gaz carbonique) et les reins artificiels (élimination de l'urée du sang).

Grâce au procédé selon l'invention, les membranes obtenues ont des propriétés favorisant encore ces utilisations. En particulier, en augmentant le rapport massique entre le polymère pelliculaire et l'homopolymère formant des microbilles, en régulant de façon plus précise l'épaisseur de la couche du polymère pelliculaire obtenu sur la matrice et donc la perméabilité du fluide à travers les pores formés dans les parois des capillaires, ce procédé permet d'obtenir un revêtement ayant une structure supramoléculaire moins défectueuse, plus orientée en direction de l'axe du capillaire et donc une membrane creuse plus résistants mécaniquement.

### Exemple de réalisation comparatif n°1

Une membrane creuse a été fabriquée par polymérisation du pyrrole à 20°C en une ou plusieurs étapes sur une matrice 1 en PET de 10 µm d'épaisseur, comportant des pores 4 de 5 µm de diamètre.

Les paramètres de fabrication sont donnés dans le tableau I ci-dessous.

**Tableau I**

| courbe | N | composition des solutions | procédé | Q (%) |
|---|---|---|---|---|
| a | 10 | Mo : 0,15 M FeCl₃ dans eau/éthanol (1:1 en vol.) + 0,05 M Py | Ox_{↓↓}Mo Ox→Mo | 23,5 |
| | | Ox : 0,016 M Na p-TS dans eau | | |
| b | 5 | Mo : 0,3 M FeCl₃ + 0,1 M Py | Ox↔Mo | 21,5 |
| | | Ox : 0,033 M Na p-TS dans eau | Ox→Mo | |
| c | 1 | Mo : 0,9 M FeCl₃ + 0,3 M Py | - | 20,8 |
| | | Ox : 0,1 M Na p-TS, sol. aqueuse | | |

avec :
- n: nombre d'étapes de polymérisation et rinçage
- Ox: solution de l'agent oxydant
- Mo: solution du monomère + agent dopant
- Py: pyrrole (monomère)
- Na p-TS: paratoluène sulfonate de sodium (dopant)
- Ox_{↓↓}Mo: les réactifs sont mis du même côté de la matrice servant de séparatrice de solution de monomère et de solution d'oxydant lors de chaque étape de polymérisation
- Ox↔Mo: les réactifs sont mis alternativement des deux côtés opposés de la matrice servant de séparatrice de Mo et Ox lors de chaque étape de polymérisation
- Q: taux de polymérisation (rapport entre la masse de polymère formée sur la matrice et la masse de la matrice)
- Ox→Mo: rinçage de la membrane en organisant le flux de liquide en direction de la surface en contact avec la solution d'oxydant vers la surface en contact avec la solution monomère + agent dopant
- Ox←Mo: rinçage de la membrane en organisant le flux de liquide en direction de la surface en contact avec Mo vers la surface en contact avec Ox

Les diamètres équivalents de pores, c'est-à-dire les dimensions du passage effectif au travers des capillaires, ont été mesurés à l'aide de l'équation de Poiseuille (perméation à l'eau distillées et microfiltrée ; le diamètre des pores est déduit de la perméabilité des membranes à l'eau après chaque étape de la polymérisation).

Les résultats sont illustrés en figure 4, les trois courbes a, b, c correspondant aux trois exemples du tableau.

On constate un colmatage important des pores de la matrice pour la polymérisation menée en une seule étape selon l'état de la technique (c) ; de ce fait, le diamètre équivalent de pores diminue 10 fois (de 5 µm à 0,5 µm) suite à une polymérisation du pyrrole au taux de polymérisation Q égal à 20,8 %.

Dans les deux cas d'une polymérisation en plusieurs étapes (a et b), et bien que le taux de polymérisation Q soit approximativement le même que pour la polymérisation en une étape, le diamètre des pores diminue certes progressivement après chaque étape de polymérisation, mais les pores restent très ouverts malgré une épaisseur croissante de leur paroi grâce au revêtement réalisé par le polymère pelliculaire et l'homopolymère.

Il est à noter que plus les solutions de monomère et de l'agent oxydant sont concentrées, plus la courbe d'évolution des diamètres des pores se trouve bas et l'incrément de diminution de la taille des pores (ou d'augmentation de l'épaisseur de la couche formée) est important.

### Exemple de réalisation comparatif n°2

Afin de vérifier l'évolution du diamètre des capillaires 14 des membranes en polypyrrole 10, trois exemples ont également été comparés en ce qui concerne le diamètre final des capillaires, calculé à l'aide de la formule de Poiseuille (basée sur les mesures de la perméabilité des membranes revêtues avec polypyrrole). Les résultats sont illustrés en figure 5 pour les modes de réalisation du tableau II ci-dessous (les mêmes symboles que pour le tableau I s'appliquent).

**Tableau II**

| N | durée (min) | procédé | composition des solutions | Q (%) |
|---|---|---|---|---|
| 1 | 40 | - | Ox : 0,9 M FeCl₃ | 20,8 |
| | | | Mo : 0,3 M Py + 0,1 M Na *p*-TS en solution aqueuse | |
| 5 | 15 | Ox_{↓↓}Mo Mo→Ox | Ox : 0,3 M FeCl₃ | 23,2 |
| | | | Mo : 0,1 M Py + 0,033 M Na p-TS en solution aqueuse | |
| 10 | 30 | Ox_{↓↓}Mo Ox→Mo | Ox : 0,15 M FeCl₃ en solution eau/alcool = 1:1 en vol. | 23,5 |
| | | | Mo : 0,05 M Py + 0,016 M Na p-TS dans eau | |

On constate sur la figure 5 que l'augmentation du nombre d'étapes de polymérisation, en diminuant en même temps la concentration de réactifs placés de deux cotés de la matrice, a pour résultat l'obtention d'un diamètre interne de capillaires plus important et donc un colmatage des pores moins profond, avec approximativement un même taux de polymérisation de polypyrrole (Q = 20,8 à 23,5). L'augmentation du nombre d'étapes et la diminution de la concentration des réactifs utilisés au cours de chaque étape de polymérisation, permet ainsi d'obtenir un rendement plus important en polymère pelliculaire qu'en homopolymère.

## Revendications

1. Membrane creuse (10) comprenant deux couches d'extrémité (12a, 12b) séparées l'une de l'autre par un espace (16) et une pluralité de tubes capillaires (14) disposés entre les deux couches d'extrémités (12a, 12b) et présentant chacun une ouverture (18a, 18b) au niveau de chacune des deux couches d'extrémité (12) de façon à former des canaux d'écoulement d'un premier fluide, l'espace entre les tubes (14) et les couches d'extrémité (12) formant une cavité interne (16) de circulation d'un deuxième fluide autour des tubes (14), les deux couches d'extrémité (12) et les tubes (14) étant de structure polymérique (6), **caractérisée en ce que** ladite structure polymérique (6) comprend une pluralité de couches (6ᵢ) polymériques successives.

2. Membrane creuse selon la revendication 1, dans laquelle les couches (6ᵢ) polymériques sont constituées du même polymère organique.

3. Membrane creuse selon la revendication 2, dans laquelle le polymère organique constituant les couches (6ᵢ) polymériques est choisi parmi les polymères électroconducteurs, notamment parmi le polyacétylène, le polypyrrole, la polyaniline et le polythiophène.

4. Membrane creuse selon la revendication 1, dans laquelle les couches (6ᵢ) polymériques sont constituées par des polymères organiques différents, appartenant à la même famille chimique.

5. Membrane creuse selon la revendication 4, dans laquelle les polymères organiques constituant les couches (6ᵢ) polymériques sont choisis parmi les polymères électroconducteurs, notamment parmi le polyacétylène, le polypyrrole, la polyaniline et le polythiophène.

6. Membrane creuse selon l'une des revendications 1 à 5, comprenant de 5·10⁴ à 10¹⁰, de préférence 10⁵ à 5·10⁹, tubes capillaires (14) par cm² de couche d'extrémité (12), dont la longueur est comprise entre 1 et 1000 µm, de préférence de 5 à 60 µm, et le diamètre interne est compris entre 0,02 et 50 µm, de préférence de 0,05 à 10 µm, et dans laquelle l'épaisseur de la structure (6) est de 0,01 à 10 µm, de préférence de 0,02 à 3 µm.

7. Membrane creuse selon l'une des revendications 1 à 6, dans laquelle les tubes capillaires (14) sont disposés selon des directions formant un angle compris entre 0 et 45° avec la perpendiculaire aux deux couches d'extrémité (12).

8. Procédé de préparation d'une membrane creuse (10) selon l'une des revendications 1 à 7, comprenant les étapes successives consistant à :
a) disposer d'une matrice (1) comportant une plaque avec deux surfaces externes (2a, 2b) et munie de pores (4) ouverts la traversant ;
b) former sur les surfaces externes (2a, 2b) et dans les pores (4) de la matrice (1) un revêtement polymérique (6₁) par polymérisation d'un monomère précurseur d'un polymère ;
c) réitérer l'étape b) de polymérisation un nombre (n) de fois, à partir à chaque fois d'un monomère précurseur.d'un polymère ;
d) éliminer le matériau formant la matrice (1) par destruction à l'aide d'un réactif sélectif qui n'affecte pas le revêtement polymérique (6) pour former la cavité interne (16) de la membrane creuse (10).

9. Procédé selon la revendication 8, dans lequel l'une des étapes successives de polymérisation au moins est réalisée par oxydation chimique par un agent oxydant, en mettant en contact une surface externe (2a) de la matrice avec une solution de monomère et l'autre surface externe (2b) de la matrice avec une solution d'un agent oxydant.

10. Procédé selon la revendication 9, dans lequel le potentiel d'oxydoréduction (E°) de l'agent oxydant lors d'une étape de polymérisation donnée est inférieur ou égal à celui de l'agent oxydant lors de l'étape de polymérisation qui la précède.

11. Procédé selon l'une des revendications 9 et 10, dans lequel, lors des étapes successives de polymérisation, la solution de monomère est mise en contact avec une surface externe (2a) de la matrice (1) et la solution de l'agent oxydant est mise en contact avec l'autre surface (2b) de la matrice (1) alternativement.

12. Procédé selon l'une des revendications 8 à 11, comprenant l'utilisation d'un agent dopant lors de l'une des étapes successives de polymérisation au moins, l'agent dopant étant choisi parmi les composés ayant un anion sulfonate, de préférence du type R-SO³⁻ où R est un groupe alkyle, aryle ou alkylaryle, et leurs sels.

13. Procédé selon l'une des revendications 8 à 12, dans lequel l'étape b) de polymérisation est réitérée entre 2 et 50 fois, de préférence dix étapes successives de polymérisation étant effectuées.

14. Module de traitement de fluides (30) comprenant :
- au moins deux membranes creuses (32) comprenant chacune deux couches d'extrémité séparées l'une de l'autre par un espace et une pluralité de tubes capillaires disposés entre les deux couches d'extrémité et présentant chacun une ouverture au niveau de chacune des deux couches d'extrémité de façon à former des canaux d'écoulement d'un premier fluide, l'espace entre les tubes et les couches d'extrémité formant une cavité interne (16) de circulation d'un deuxième fluide autour des tubes, les deux couches d'extrémité et les tubes étant de structure unitaire polymérique ;
- une enceinte étanche (38) dans laquelle sont disposées les membranes creuses (32) de façon à ménager entre deux membranes creuses adjacentes, et entre chaque membrane creuse qui est adjacente à la paroi ou à l'une des parois de l'enceinte et cette ou ces parois, des espaces de circulation (36) du premier fluide en communication uniquement avec l'intérieur des tubes capillaires des membranes creuses ;
- des moyens (46, 48) pour mettre en circulation ledit premier fluide dans les tubes capillaires des membranes creuses en l'introduisant dans l'un desdits espaces de circulation et en le recueillant dans un autre desdits espaces de circulation ; et
- des moyens (50, 52) pour mettre en circulation au moins un deuxième fluide dans les cavités internes des membranes creuses ;
**caractérisé en ce que** l'une des membranes creuses au moins est telle que définie dans l'une des revendications 1 à 7 ou obtenue par le procédé selon l'une des revendications 8 à 13.

15. Module selon la revendication 14 comprenant une pluralité de membranes creuses telles que définies dans l'une des revendications 1 à 7.

16. Procédé de fabrication d'un module de traitement de fluides selon l'une des revendications 14 et 15, comportant les étapes suivantes :
- préparer au moins deux membranes composites (8'), chacune à partir d'une matrice (1) comprenant une plaque avec deux surfaces externes (2a, 2b) et munie de pores (4) ouverts la traversant, en formant sur les surfaces externes et dans les pores de la matrice un revêtement polymérique (6) par polymérisation d'un monomère précurseur d'un polymère, la polymérisation étant réitérée un nombre (n) de fois pour au moins l'une des deux membranes composites (8'), à partir chaque fois d'un monomère précurseur d'un polymère ;
- former à partir des membranes composites (8') et de plaques (34) de matière poreuse un empilement dans lequel chaque membrane composite est disposée entre deux plaques de matière poreuse (34) ;
- former un ou plusieurs joints (44) étanches entre les membranes composites (8') et les plaques poreuses (34) sur les faces latérales de l'empilement ;
- réaliser des ouvertures dans le (les) joint (s) étanche (s) (44) au niveau des membranes composites (8'), et pour chaque membrane composite seulement sur deux faces latérales différentes de l'empilement ;
- introduire par ces ouvertures un réactif capable de détruire le matériau formant la matrice (1) des membranes composites (8') sans affecter le revêtement polymérique (6), pour obtenir un empilement d'au moins deux membranes creuses (10) et de plaques de matière poreuse (34) dans lequel les cavités internes (16) des membranes creuses (10) sont accessibles sur les deux faces latérales de l'empilement.

## Claims

1. A hollow membrane (10) comprising two end layers (12a, 12b) separated from each other by a space (16) and a plurality of capillary tubes (14) positioned between both end layers (12a, 12b) and each having an aperture (18a, 18b) at each of the two end layers (12) so as to form flow channels for a first fluid, the space between the tubes (14) and the end layers (12) forming an internal cavity (16) for circulation of a second fluid around the tubes (14), both end layers (12) and the tubes (14) being of polymeric structure (6), **characterized in that** said polymeric structure (6) comprises a plurality of successive polymeric layers (6ᵢ).

2. The hollow membrane according to claim 1, wherein the polymeric layers (6ᵢ) consist of the same organic polymer.

3. The hollow membrane according to claim 2, wherein the organic polymer forming the polymeric layers (6ᵢ) is selected from electrically conducting polymers, notably from polyacetylene, polypyrrole, polyaniline and polythiophene.

4. The hollow membrane according to claim 1, wherein the polymeric layers (6ᵢ) are formed by different organic polymers belonging to the same chemical family.

5. The hollow membrane according to claim 4, wherein the organic polymers forming the polymeric layers (6ᵢ) are selected from electrically conducting polymers, notably from polyacetylene, polypyrrole, polyaniline and polythiophene.

6. The hollow membrane according to one of claims 1 to 5, comprising from 5.10⁴ to 10¹⁰, preferably 10⁵ to 5.10⁹ capillary tubes (14) per cm² of end layer (12), the length of which is comprised between 1 and 1,000 µm, preferably from 5 to 60 µm, and the internal diameter is comprised between 0.02 and 50 µm, preferably from 0.05 to 10 µm, and wherein the thickness of the structure (6) is from 0.01 to 10 µm, preferably from 0.02 to 3 µm.

7. The hollow membrane according to one of claims 1 to 6, wherein the capillary tubes (14) are positioned along directions forming an angle comprised between 0 and 45° with the perpendicular to both end layers (12).

8. A method for preparing a hollow membrane (10) according to one of claims 1 to 7, comprising the successive steps:
a) providing a matrix (1) including a plate with two external 1 surfaces (2a, 2b) and provided with open pores (4) passing through it;
b) forming on the external surfaces (2a, 2b) and in the pores (4) of the matrix (1), a polymeric coating (6₁) by polymerization of a monomeric precursor of a polymer;
c) repeating the polymerization step b) a certain number (n) of times, each time starting from a monomeric precursor of a Polymer;
d) removing the material forming the matrix (1) by destruction with a selective agent which does not affect the polymeric coating (6) in order to form the internal cavity (16) of the hollow membrane (10).

9. The method according to claim 8, wherein one of the successive polymerization steps is at least achieved by chemical oxidation with an oxidizing agent, by putting an external surface (2a) of the matrix in contact with a solution of monomer and the other external surface (2b) of the matrix in contact with the solution of oxidizing agent.

10. The method according to claim 9, wherein the redox potential (E°) of the oxidizing agent during a given polymerization step is less than or equal to that of the oxidizing agent during the polymerization step which precedes it.

11. The method according to one of claims 9 and 10, wherein, during successive polymerization steps, the monomer solution is put into contact with an external surface (2a) of the matrix (1) and the solution of oxidizing agent is put into contact with the other surface (2b) of the matrix (1) alternately.

12. The hollow membrane according to one of claims 8 to 11, comprising the use of a doping agent during at least one of the successive polymerization steps, the doping agent being selected from compounds having a sulfonate anion, preferably of the R-SO³⁻ type wherein R is an alkyl, aryl or alkylaryl group, and their salts.

13. The method according to one of claims 8 to 12, wherein the polymerization step b) is repeated between 2 and 50 times, preferably ten successive polymerization steps being carried out.

14. A module for treating fluids (30) comprising:
- at least two hollow membranes (32) each comprising two end layers separated from each other by a space and a plurality of capillary tubes positioned between both end layers and each having an aperture at each of the two end layers so as to form flow channels for a first fluid, the space between the tubes and the end layers forming an internal cavity (16) for circulation of a second fluid around the tubes, both end layers and the tubes being of polymeric unitary structure;
- a leakproof closure (38) in which are arranged the hollow membranes (32) so as to make, between two adjacent hollow membranes, and between each hollow membrane which is adjacent to the wall or to one of the walls of the enclosure and this (these) wall(s), spaces for circulation (36) of a first fluid only in communication with the inside of the capillary tubes of the hollow membrane;
- means (46, 48) for circulating said first fluid in the capillary tubes of the hollow membranes by introducing it into one of said circulation spaces and by collecting it at another of said circulation spaces; and
- means (50, 52) for circulating at least one second fluid in the internal cavities of the hollow membranes;
**characterized in that** at least one of the hollow membranes is as defined in one of claims 1 to 7 or obtained by the method according to one or claims 8 to 13.

15. The module according to claim 14 comprising a plurality of hollow membranes as defined in one of claims 1 to 7.

16. A method for manufacturing a module for treating fluids according to one of claims 14 and 15, including the following steps:
- preparing at least two composite membranes (8'), each from a matrix (1) comprising a plate with two external surfaces (2a, 2b) and provided with open pores (4) passing through, it, by forming on the external surfaces and in the pores of the matrix a polymeric coating (6) by polymerization of a monomeric precursor of a polymer, the polymerization being repeated a certain number (n) of times for at least one of the two composite membranes (8'), each time from a monomeric precursor of a polymer;
- forming from the composite membranes (8') and from plates (34) of porous material a stack in which each composite membrane is positioned between two plates of porous material (34) ;
- forming one or more leakproof joints (44) between the composite membranes (8') and the porous plates (34) on the side faces of the stack;
- making apertures in the leakproof joint(s) (44) at the composite membranes (8'), and for each composite membrane only on two different side faces of the stack;
- introducing through these apertures a reagent capable of destroying the material forming the matrix (1) of the composite membranes (8') without affecting the polymeric coating (6), in order to obtain a stack of at least two hollow membranes (10) and of plates of porous material (34) in which the internal cavities (16) of the hollow membranes (10) are accessible on both side faces of the stack.

## Patentansprüche

1. Hohl-Membran (Hohlraummembran) (10), welche zwei von einander durch einen Abstandszwischenraum getrennte End- bzw. Randschichten (12a, 12b) sowie eine Mehrzahl von zwischen den beiden End- bzw. Randschichten (12a, 12b) angeordneten Kapillarröhren (14) umfaßt, deren jede jeweils eine Öffmumg (18a, 18b) auf dem Niveau jeder der beiden End- bzw. Randschichten (12) aufweist, derart dass Strömungskanäle für ein erstes Strömungsmittel gebildet werden, wobei der Zwischenraum zwischen den Röhren (14) und den End- bzw. Randschichten (12) einen inneren Hohlraum (16) für die Zirkulation eines zweiten Strömungsmittels um die Röhren (14) bildet, wobei die beiden End- bzw. Randschichten (12) und die Röhren (14) eine Polymerstruktur sind, **dadurch** gekenn zeichnet, dass die genannte Polymerstruktur (6) eine Mehrzahl von aufeinander folgenden Polymerschichten (6ᵢ) umfasst.

2. Hohlmembran nach Anspruch 1, in welcher die Polymerschichten (6ᵢ) aus ein und demselben organischen Polymer bestehen.

3. Hohlmembran nach Anspruch 2, in welchem das die Polymerschichten (6ᵢ) bildende organische Polymer aus elektrisch leitenden Polymeren, darunter insbesondere Polyacetylen, Polypyrrol, Polyanilin und Polythiophen, gewählt sind.

4. Hohlmembran nach Anspruch 1, in welchem die Polymerschichten (6ᵢ) aus von einander verschiedenen, jedoch zur gleichen chemischen Familie gehörenden organischen Polymeren bestehen.

5. Hohlmembran nach Anspruch 4, in welcher die die Polymerschichten (6ᵢ) bindenden organischen Polymere unter den elefttrisch leitenden Polymeren, insbesondere unter Polyacetylen, Polypyrrol, Polyanilin und Polythiophen gewählt sind.

6. Hohlmembran nach einem der Ansprüche 1 bis 5, welche von 5 10⁴ bis 10¹⁰, vorzugsweise von 10⁵ bis 5 · 10⁹, Kapillarröhren (14) pro cm² End- bzw. Randschicht (12) aufweist, deren Länge im Bereich zwischen 1 und 1000 µm, vorzugsweise von 5 bis 60 µm liegt, und deren Innendurchmesser im Bereich zwischen 0,02 und 50 µm und vorzugsweise von 0,05 bis 10 µm liegt und in welcher die Dicke bzw. Wandstärke der Struktur (6) von 0,01 bis 10 µm, und vorzugsweise von 0,02 bis 3 µm beträgt.

7. Hohlmembran nach einem der Ansprüche 1 bis 6, in welchen die Kapillarröhren (14) längs Richtungen angeordnet sind, welche mit der Senkrechten auf den beiden End- bzw. Randschichten (12) einen Winkel im Bereich zwischen 0° und 45 ° bilden.

8. Verfahren zur Herstellung einer Hohlmembran (10) gemäß einem der Ansprüche 1 bis 7, welches die folgenden Schritte bzw. Stufen umfasst:
a) Schaffen einer Matrize (1), welche eine Tafel bzw. Platte mit zwei Außenoberflächen (2a, 2b) umfasst und mit diese durchsetzenden offenen Poren (4) versehen ist;
b) Ausbilden eines Polymer-Überzugs (6ᵢ) auf den Außenoberflächen (2a, 2b) und in den Poren (4) der Matrize (1) durch Polymerisation eines monomeren Vorläufermaterials eines Polymers;
c) Wiederholen der Verfahrensstufe b) der Polymerisation eine Anzahl (n) von Malen, jedesmal ausgehend von einem monomeren Vorläufermaterial eines Polymeren;
d) Eliminierten des die Matrize (1) bildenden Materials durch Zerstören mit Hilfe eines den Polymerüberzug (6ᵢ) nicht beeinträchtigenden selektiven Reagens, zur Ausbildung des inneren Hohlraums (16) der Hohlmembran (10).

9. Verfahren nach Anspruch 8, bei welchem wenigstens eine der aufeinander folgenden Polymerisations-Stufen durch chemische Oxydation mittels eines Oxydationsmittels erfolgt, indem man eine Außenoberfläche (2a) der Matrize mit einer Monomerlösung und die andere Außenoberfläche (2b) der Matrize mit einer Lösung eines Oxydationsmittels in Kontakt bringt.

10. Verfahren nach Anspruch 9, bei welchem das Oxydations-Reduktionspotential (E°) des Oxydationsmittels während einer bestimmten gegebenen Polymerisations-Verfahrensstufe kleiner als das des Oxydationsmittels während der vorhergehenden Polymerisations-Stufe ist.

11. Verfahren nach einem der Ansprüche 9 und 10, bei welchem in den aufeinander folgenden Polymerisationsstufen die Kontaktierung einer Außenoberfläche (2a) der Matrize (1) mit der Monomerlösung und die Kontaktierung der anderen Außenoberfläche (2b) der Matrize (1) mit der Oxydationsmittellösung abwechselnd erfolgen.

12. Verfahren nach einem der Ansprüche 8 bis 11, welches die Verwendung eines Dotierungsmittels während wenigstens einer der aufeinander folgenden Polymerisationsstufen umfasst, das aus den ein Sulfonat-Anion, vorzugsweise vom Typ R-SO³⁻, worin R eine Alkyl-, Aryl- oder eine Alkylaryl-Gruppe ist, enthaltenden Verbindungen und deren Salzen gewählt ist.

13. Verfahren nach einem der Ansprüche 8 bis 12, bei welchem die Polymerisationsstufe b) zwischen 2 bis 50 mal wiederholt wird, wo bei vorzugsweise 10 aufeinander folgende Polymerisationsstufen ausgeführt werden.

14. Modul zur Behandlung von Strömungsmitteln (30), umfassend:
- wenigstens zwei Hohlmembranen (Hohlraummembranen) (32),
deren jede jeweils zwei durch einen Zwischenraum voneinander getrennte End- bzw. Randschichten und eine Mehrzahl von zwischen den beiden End- bzw. Randschichten angeordneten Kapillarröhren umfasst, wobei jede der Kapillarröhren jeweils eine Öffnung auf dem Niveau jeder der beiden End- bzw. Randschichten aufweist zur Bildung von Strömungskanälen für ein erstes Strömungsmittel, und wobei der Raum zwischen den Kapillarröhren und den beiden End- bzw. Randschichten einen inneren Hohlraum (16) für die Zirkulation eines zweiten Strömungsmittels um die Röhren bildet, und wobei die beiden End- bzw. Randschichten und die Kapillarröhren eine einheitliche ein-stückige Polymer-Struktur bilden;
- eine dichte Umschließung bzw. Umhüllung (38), in welcher die Hohlmembranen (32) so angeordnet sind, dass zwischen zwei benachbarten Hohlmembranen
sowie zwischen jeweils jeder Hohlmembran, die benachbart der Wandung oder einer der Wandungen der Umhüllung bzw. Einschließung und dieser Wandung bzw. diesen Wandungen liegt, Kreislaufräume (36) zur Zirkulation des ersten Sfirämungsmitteis in Verbindung ausschließlich mit dem Inneren der Kapillarröhren der Hohlmembranen gebildet werden;
- Mittel (46, 48), um das genannte erste Strömungsmittel in den Kapillarröhren der Hohlmembranen in Kreislauf zu bringen, indem es in einen der genannten Kreislaufräume eingeleitet und in einem anderen der genannten Kreisfaufräume abgeführt wird; sowie
- Mittel (50, 52), um wenigstens ein zweites Strömungsmittel in den inneren Hohlräumen der Hohlmembranen in Kreislauf zu versetzen;
**dadurch** gekenntzeichnet, dass wenigstens eine der Hohlmembranen von der in einem der Ansprüche 1 bis 7 definierten Art oder wie nach dem Verfahren gemäß einem der Ansprüche 8 bis 13 erhalten ist.

15. Modul nach Anspruch 14, welches eine Mehrzahl von Membranen der in einem der Ansprüche 1 bis 7 definierten Art umfasst.

16. Verfahren zur Herstellung eines Moduls zur Behandlung von Strömungsmitteln gemäß einem der Ansprüche 14 oder 15, das die folgenden Verfahrensstufen bzw. Schritte umfasst:
- Bereitstellen von wenigstens zwei Komposit- bzw. Verbundmembranen (8'), jede jeweils ausgehend von einer Matrize (1), welche eine Platte bzw. Tafel mit zwei Außenoberflächen (2a, 2b) umfasst und mit sie durchsetzenden offenen Poren (4) versehen ist, wobei auf den Außenoberflächen und in den Poren der Matrize ein Polymerüberzug bzw. Auskleidung (4) ausgebildet wird durch Polymerisation eines monomeren Polymer-Vorläufers, wobei die Polymerisation eine Anzahl (n) von Malen für wenigstens eine der beiden Kompositmembranen (8') wiederholt wird, jedesmal jeweils ausgehend von einem monomeren Vorläufer eines Polymers;
- ausgehend von den Kompositmembranen (8') und den Platten bzw, Tafeln (34) aus porösem Material Ausbilden eines Schichtstapels, in welchem jeweils jede Kompositmembran zwischen zwei Platten bzw. Tafeln (34) aus porösem Material angeordnet ist;
- Ausbilden einer oder mehrerer dichter Verbindungen zwischen den Kompositmembranen (8') und den porösen Platten bzw. Tafeln (34) auf den seitlichen Flächen des Schichtstapels;
- Herstellen von Öffnungen in der/den dichten Verbindung(en) auf dem Niveau der Kompositmembranen (8') und für jeweils jede Kompositmembran nur auf zwei verschiedenen Seitenflächen des Schichtstapels;
- durch diese Öffnungen wird ein Reagens eingeführt, welches das die Matrize (1) der Kompositmembranen (8') bildende Material zu zerstören vermag ohne den Polymerüberzug (6) zu beeinträchtigen, zur Erzielung eines Schichtstapels aus wenigstens zwei Hohlmembranen (10) und Platten bzw. Tafeln (34) aus porösem Material, in welchem die inneren Hohlräume (16) der Hol7lmembranen an den beiden Seitenflächen des Schichtstapels zugänglich sind.
